(19) Europäisches Patentamt
European Patent Office
Office européen des brevets

(11) Veröffentlichungsnummer: **0 284 649 A1**

# (12) EUROPÄISCHE PATENTANMELDUNG

(21) Anmeldenummer: **87112195.0**

(22) Anmeldetag: **22.08.87**

(51) Int. Cl.⁴: **C08K 5/40**, C08L 21/00

(30) Priorität: **21.03.87 DE 3709312**

(43) Veröffentlichungstag der Anmeldung: **05.10.88 Patentblatt 88/40**

(84) Benannte Vertragsstaaten: **AT BE DE ES FR GB IT NL SE**

(71) Anmelder: **Firma Carl Freudenberg**
**Höhnerweg 4**
**D-6940 Weinheim/Bergstrasse(DE)**

(72) Erfinder: **Kuhlmann, Thomas, Dr.**
**Werderplatz 9**
**D-6900 Heidelberg(DE)**
Erfinder: **Von Arndt, Ernst-Moritz, Dr.**
**Leuschnerstrasse 31**
**D-6940 Weinheim(DE)**

(74) Vertreter: **Weissenfeld-Richters, Helga, Dr.**
**Höhnerweg 2**
**D-6940 Weinheim/Bergstrasse(DE)**

## (54) Vulkanisationsbeschleuniger.

(57) Bei Verwendung von Tetrabenzylthiuramtetrasulfid als Vulkanisationsbeschleuniger entstehen keine krebserregenden Nitrosamine.

EP 0 284 649 A1

Xerox Copy Centre

## Vulkanisationsbeschleuniger

Aus Gummiartikeln werden flüchtige Nitrosamine an die Luft abgegeben. Sie werden durch Kautschukchemikalien (z. B. Aktivatoren, Beschleuniger, Schwefelspender und Verzögerer) gebildet, die Amine enthalten. Zahlreiche Tierversuche beweisen die kanzerogene Wirkung von N-Nitroso-di-n-butylamin, N-Nitroso-diethanolamin, N-Nitroso-diethylamin, N-Nitroso-dimethylamin, N-Nitroso-di-isopropylamin, N-Nitroso-di-n-propylamin, N-Nitrosoethylphenylamin, N-Nitroso-methylethylamin, N-Nitroso-methylphenylamin, Nitrosomorpholin, N-Nitroso-piperidin und N-Nitrosopyrrolidin (TRK-Werte 1986, A2-Stoffe). Die Emission der genannten Nitrosamine muß aus diesem Grunde verhindert werden. Bisherige Gegenmaßnahmen sind gute Be-und Entlüftung der betroffenen Räume, Absaugungen über den Nitrosaminquellen, Abgrenzung des exponierten Personenkreises, Atemschutz, Verminderung der Beschleunigerdosierung, Vermeidung von NO-Überträgern, Eliminierung von Nitriten, Nitraten und freien sekundären Aminen in den Einsatzstoffen (Hermann Lohwasser, Nitrosamine in der Gummiindustrie, Zeitschrift Gummi, Asbest, Kunststoffe, August 1986, S. 385 ff.).

Eine Eliminierung der flüchtigen Nitrosamine ist auf diesem Wege nicht möglich. Absaugungen verlagern die Kontamination der Räume auf die Umwelt. Ohne Qualitätseinbußen lassen sich viele Gummiartikel mit aminfreien Beschleunigern nicht herstellen. Aus diesen Gründen ist bisher eine Emission von Nitrosaminen nicht zu vermeiden.

Das Nitrosaminproblem ist in der Gummiindustrie seit vielen Jahren bekannt. Der Druck zur Eliminierung kanzerogener Nitrosamine verstärkt sich von Seiten des Gewerbeaufsichtsamtes und der Abnehmer.

Untersuchungen des Deutschen Krebsforschungszentrums haben ergeben, daß die Nitrosamine als solche nicht krebserregend wirken. Im Organismus werden die Nitrosamine in α-Stellung zur N-Nitrosogruppe hydroxyliert und zersetzen sich unter Elimination von Aldehyd zum entsprechenden Alkandiazohydroxid. Erst die anschließende Alkylierung von Nukleinsäuren kann zum Krebs führen.

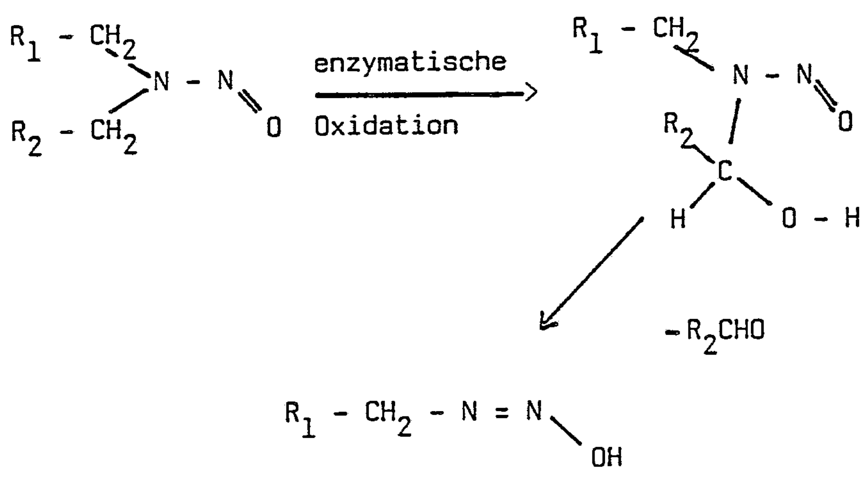


Alkylierung von DNS, RNS, Protein

Diese Mutation ist unmöglich, wenn die Aminkomponente in α-Stellung blockiert und so keine Hydroxylierung möglich ist. Beispiele hierfür sind das t-Butylamin oder das 2,3,5,6-Tetramethylpiperazin. Eine Hydroxylierung kann auch durch entsprechende Nachbarsubstituenten verhindert werden.

Dies gilt für das Bis (2,2,2-trifluorethyl)-amin und das Dibenzylamin. Die genannten Nitrosamine sind nicht krebserregend. Entsprechende Beschleunigertypen sind im Hinblick auf den möglichen kanzerogenfreien Einsatz in der Gummiindustrie in DE-PS 32 43 141 genannt. Welche Nitrosoverbindungen als solche nicht kanzerogen sind, wurde bereits von Druckrey et al., Z. Krebsforsch. 69, 103 - 201 (1967), offenbart.

Wie sehr das genannte Problem die Gummiindustrie belastet, geht aus einer jüngsten Veröffentlichung in Kautschuk + Gummi Kunststoffe vom Januar 1987 hervor (40. Jahrgang, Nr. 1 <1987>, S. 32), wo klar zum Ausdruck gebracht wird, daß von der Nitrosaminbildung unsere wirkungsvollsten Beschleuniger und

Vernetzungssysteme betroffen seien. Von möglichen Ersatzstoffen gleicher Wirkung könne nicht berichtet werden. Es sei für dieses Kapitel ein Fehlbestand zu melden.

Für die Nitrosaminbildung aus Thiurambeschleunigern wird allgemein folgender Mechanismus diskutiert (K. G. Ashnoss et al., Plastics and Rubber Processing and Appl. 4 (1984), 74):

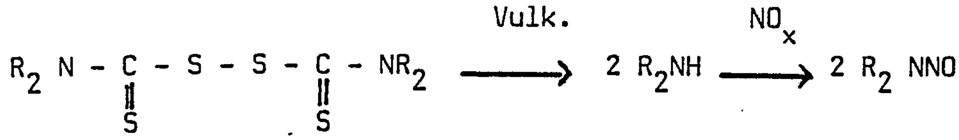


Denkbar ist auch, daß ein Teil der abgespaltenen Aminfragmente direkt nitrosiert wird:

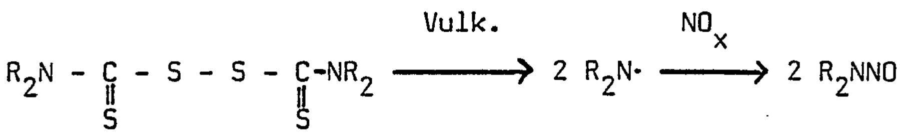


Im ersten Fall kann das Nitrosamin während und nach der Vulkanisation durch Reaktion des Amins mit Stickoxiden aus der Luft gebildet werden. Im zweiten Fall liegt das Nitrosamin nach der Vulkanisation bereits im Gummi vor und gast langsam aus.

Das nötige nitrosierende Agens ist in der Luft und durch den Herstellungsprozeß auf den Füllstoffen enthalten. Entweder bei der unvollständigen Verbrennung (Ruß) oder beim Trocknen über einer Gasflamme (Kieselgele) kommen sie mit Stickoxiden in Kontakt. Da die Füllstoffe eine große Oberfläche besitzen und die Stickoxide gut adsorbieren sollten (polarer als Umgebungsluft), könnte von ihnen die Nitrosierung ausgehen.

Die Erfindung hat zur Aufgabe, die Bildung kanzerogener Nitrosamine aus Vulkanisationsbeschleunigern bei Herstellung, Verarbeitung und Gebrauch von Kautschuk-Vulkanisaten zu vermeiden und dennoch einen Beschleuniger anzugeben, durch dessen Einsatz weder hinsichtlich Verarbeitbarkeit noch Produktqualität Einbußen bzw. Nachteile hingenommen zu werden brauchen.

Gelöst wird diese Aufgabe durch die im Patentanspruch dargelegte Maßnahme.

Eine mögliche Herstellungsmethode für den erfindungsgemäß eingesetzten Tetrabenzylthiuramtetrasulfid-Beschleuniger ist in US-A 1,681,717 für analoge Verbindungen beschrieben. Das Kontaminationsproblem durch Nitrosamine in der Gummiindustrie war damals noch nicht bekannt.

Die erfindungsgemäße Verwendung des Vulkanisations-Beschleunigers Tetrabenzylthiuramtetrasulfid, chemische Formel

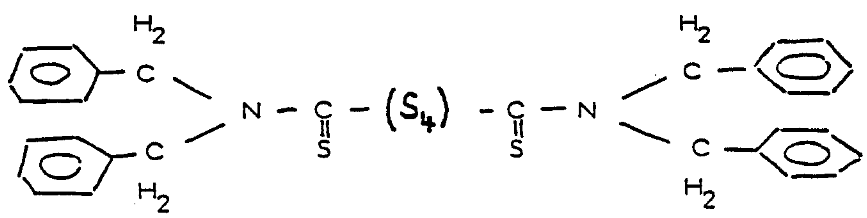

bietet neben der Lösung der gestellten Aufgabe folgende Vorteile:

1. Das entstehende Dibenzylnitrosamin führt wegen seines hohen Molekulargewichtes zu keiner meßbaren Belastung der Umgebungsluft; es verbleibt im Gummiformteil.

2. Gummiabfälle fallen heute in großen Mengen auf Deponien an. Um eine Belastung der Umwelt zu vermeiden, ist es wünschenswert, daß keine löslichen Produkte in das Grundwasser kommen. Von den bisher eingesetzten Thiruambeschleunigern ist bekannt, daß eine nennenswerte Auswaschung von Dithiocarbaminsäurederivaten durch Wasser erfolgt (so. z. B. von Tetramethylthiuramdisulfid: 20 mg/l; Semukhina et al., Gig. Sanit., (2), S. 74 f. (1975, UdSSR). Ein solches Auswaschen des unpolaren Dibenzylnitrosamins aus dem erfindungsgemäß verarbeiteten Vulkanisat wurde nicht beobachtet.

Die Meßmethode zur Bestimmung von Nitrosaminen (gaschromatographische Trennung und anschließende Bestimmung mit einem Chemilumineszenzdetektor) ist heute sehr empfindlich. Die Nachweisgrenze liegt bei ca. 0,2 µg/m³. Bisher wird der Nitrosamingehalt vom Gummiteilen durch Flüssigextraktion

und anschließende Nitrosaminbestimmungen durchgeführt, um die Konzentration bei der Verarbeitung zahlreicher Mischungen oder der Lagerung von Fertigteilen zu bestimmen. Beide Methoden sagen nichts über die spezifische Nitrosaminabgabe unterschiedlicher Vulkanisate an die umgebende Luft aus. Der direkte Vergleich eines "harmlosen" mit einem "gefährlichen" Vulkanisat ist auf diesem Wege nicht möglich.

Figur 1 zeigt schematisch eine Meßanordnung der Anmelderin, die es gestattet, die spezifische Nitrosaminabgabe an die Umgebungsluft sicher zu bestimmen.

Prüfplatten des Vulkanisates (20 cm x 20 cm x 0,2 cm) werden vor jeder Messung in 1 Quadratzentimeter große Plättchen geschnitten und in ein Glasrohr 1 (80 cm Länge, 2,5 cm Innendurchmesser) gefüllt. Anschließend wird bei 22°C eine definierte nitrosaminfreie Luftmenge (60 l) in 60 Minuten kontinuierlich mittels einer Pumpe 3 über die resultierende Oberfläche (0,11 $m^2$) geleitet. Die an den Luftstrom abgegebenen Nitrosamine werden in Thermosorbröhrchen 2 (kommerziell erhältliche Proberöhrchen mit einer geeigneten Adsorbersubstanz) adsorbiert und nach gaschromatographischer Trennung mit einem Chemilumineszenzdetektor analysiert. Die Meßanordnung erlaubt die direkte Zuordnung von quantitativ bestimmten Nitrosaminen zu den entsprechenden Kautschukchemikalien. Ob Nitrosamininhibitoren oder Rezepturänderungen sich bezüglich der Abgabe flüchtiger Nitrosamine bewähren, läßt sich sofort nachweisen.

Beispiel:

Mit der entwickelten Meßmethode wurde für sechs Elastomere, die sich nur durch die eingesetzten Beschleuniger unterschieden, die Nitrosaminabgabe gemessen. In Tabelle I sind die Zusammensetzungen der Mischungen aufgeführt, in Tabelle II die gefundenen Nitrosaminkonzentrationen. Figur 2 zeigt die Rheometerkurven der Mischungen.

Tabelle 1

| Mischung | 1 | 2 | 3 | 4 | 5 | 6 | |
|---|---|---|---|---|---|---|---|
| NBR | 100,0 | + | + | + | + | + | Teile |
| ZnO-Paste | 5,5 | + | + | + | + | + | - " - |
| Stearinsäure | 1,0 | + | + | + | + | + | - " - |
| Ruß N 990 | 50,0 | + | + | + | + | + | - " - |
| S-Paste 120 | 0,5 | 0,5 | - | - | - | - | - " - |
| Pentamethylenthiuramtetrasulfid | - | - | - | 2,7 | - | 1,1 | - " - |
| Tetramethylthiuramdisulfid | 3,0 | - | - | - | 3,0 | 3,0 | - " - |
| Diphenyldimethylthiuramdisulfid (gebräuchlich) | - | 3,8 | - | - | - | - | - " - |
| Tetrabenzylthiuramtetrasulfid (Erfindung) | - | - | 4,3 | - | 1,8 | - | - " - |

(+: wie Spalte 1)

Tabelle II

| Mischung | 1 | 2 | 3 | 4 | 5 | 6 |
|---|---|---|---|---|---|---|
| Flüchtige Nitrosamine | B | A | - | C | B | B+C |
| bei 22°C ($\mu g/m^3$) | 5,0 | 7,1 | - | 2,8 | 4,4 | 3,0+6,3 |

Nachweisgrenze: < 0,2 $\mu g/m^3$

(A: Nitrosomethylphenylamin; B: Nitrosodimethylamin;
C: Nitrosopentamethylenamin; Nitrosodibenzylamin ist nicht nachzuweisen)

Bestimmung des Gehaltes an flüchtigen N-Nitrosaminen und schwerflüchtigen N-Nitrosaminen im Thermosorbröhrchen: Jedes Röhrchen wurde zweimal mit je 1 ml Lösungsmittelgemisch (75/25, Dichlormethan/Methanol) eluiert. Nach gaschromatographischer Trennung wurden die Nitrosamine mit authentischen Reinsubstanzen verglichen und quantifiziert.

Wie aus Tabelle II ersichtlich, werden mit den herkömmlichen Thiurambeschleunigern die erwarteten N-Nitrosamine gebildet. Dies beweist den direkten Zusammenhang zwischen eingesetztem Beschleuniger und gebildetem Nitrosamin. In den Elastomerzusammensetzungen mit Tetrabenzylthiuramtetrasulfid können keine flüchtigen Nitrosamine detektiert werden. Die Rheometerkurven in Figur 2 zeigen, daß die Vulkanisationseigenschaften, also das Ausmaß der Vernetzung, der Mischungen 1 bis 6 einander ähnlich sind (Ordinate: Drehmoment in 1b, oszillierende Bewegung ± 1°).

Zum Vergleich der Beschleunigereigenschaften sind in Tabelle III die mechanischen Werte der Mischungen 1 bis 6 aus dem vorangehenden Beispiel angegeben:

Tabelle III

| Mischung | 1 | 2 | 3 | 4 | 5 | 6 |
|---|---|---|---|---|---|---|
| Härte Shore A (DIN 53505) | 60 | 57 | 56 | 58 | 58 | 60 |
| Zugfestigkeit $N/mm^2$ | 8,1 | 8,9 | 10,0 | 12,6 | 7,0 | 11,7 |
| Bruchdehnung % | 354 | 490 | 607 | 653 | 368 | 446 |
| Spannwert 100% Dhng. $N/mm^2$ | 1,7 | 1,5 | 1,3 | 1,5 | 1,5 | 1,8 |

Die Beschleunigereigenschaften von TBTT (Tetrabenzylthiuramtetrasulfid) sind denen des DDTD (Diphenyldimethylthiuramdisulfid) und TMTD (Tetramethylthiuramdisulfid) ähnlich. Der Vergleich der Rheometerkurven der Mischung 1, 2, 3, 5 und 6 zeigt jeweils ein ähnliches Vulkanisationsverhalten. Das PMTT weist den steilsten Anstieg auf. Die Vulkanisationsplateaus liegen auf ähnlicher Höhe, da äquimolare Mengen des reaktiven Schwefels eingesetzt wurden.

Die Rheometerkurven und die mechanischen Werte beweisen, daß mit der erfindungsgemäßen Verwendung von Tetrabenzylthiuramtetrasulfid der Ersatz der am häufigsten eingesetzten Thiurambeschleunigertypen ohne Qualitätseinbußen möglich ist.

Die Verarbeitbarkeit auf der Walze ist bei TBTT ebenso gut wie bei üblichen Beschleunigern.

Durch die Erfindung werden also folgende Vorteile erzielt:

1. Es können Gummiartikel hergestellt werden, die bei Raumtemperatur und Vulkanisationstemperatur keine kanzerogenen Nitrosamine an die Umwelt abgeben.
2. Das gebildete Nitrosamin ist schwer flüchtig.
3. Die Produkteigenschaften des Elastomeren und die Qualität des Vulkanisationsprozesses sind nicht verschlechtert.
4. Die Deponierung von gebrauchten Gummiteilen bereitet keine zusätzlichen Probleme bezüglich des Auswaschungsverhaltens.

**Ansprüche**

Verwendung von Tetrabenzylthiuramtetrasulfid zum Verhindern der Entstehung kanzerogener Nitrosamine aus dem Beschleunigersystem bei Fertigung und Gebrauch von Kautschuk-Vulkanisaten.

Fig. 1

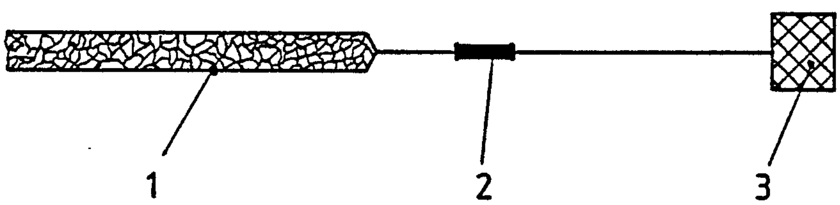

Fig. 2

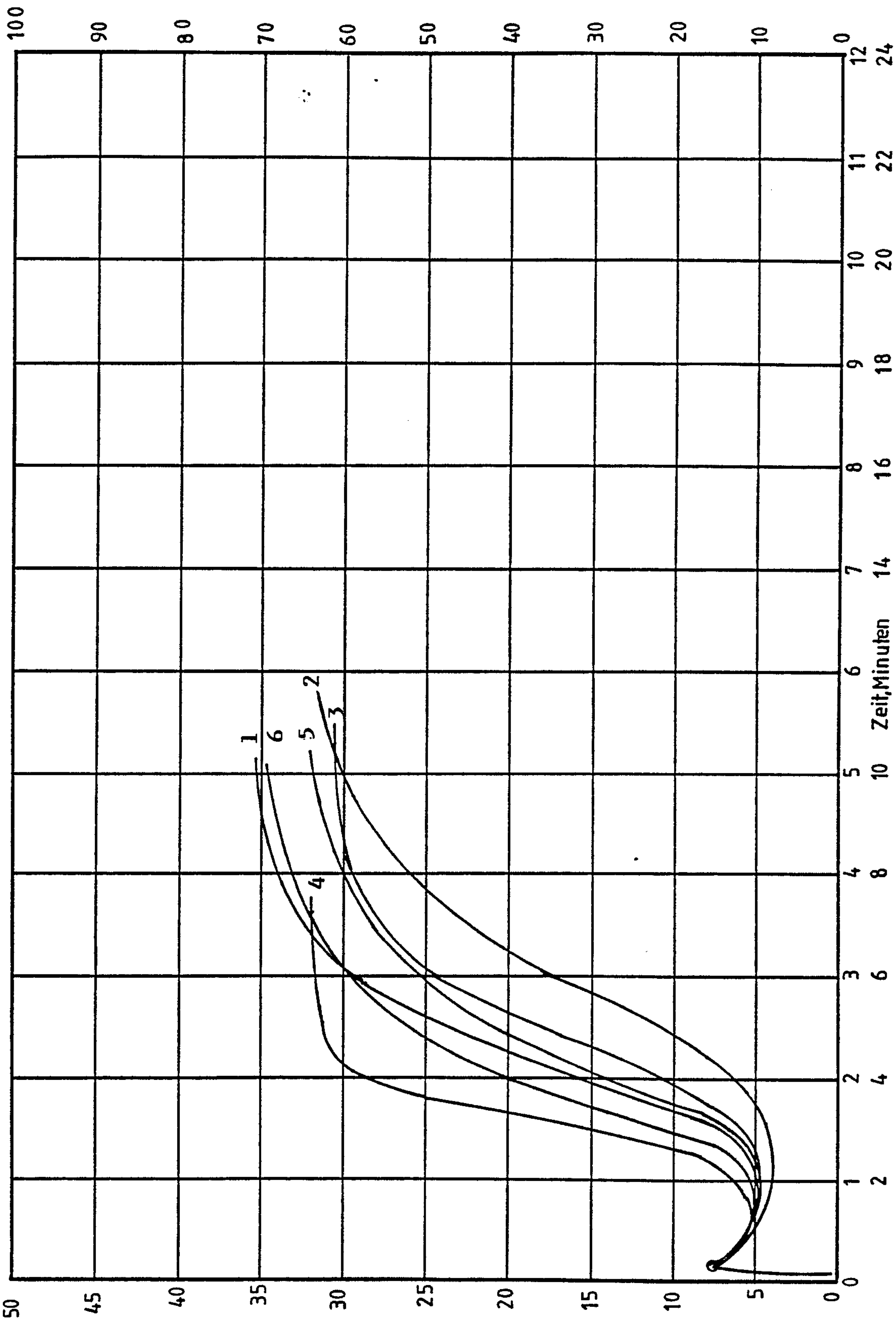
Zeit,Minuten
0 1 2 3 4 5 6 7 8 9 10 11 12
0 2 4 6 8 10 12 14 16 18 20 22 24
0 5 10 15 20 25 30 35 40 45 50
0 10 20 30 40 50 60 70 80 90 100
1
2
3
4
5
6

Europäisches Patentamt

# EUROPÄISCHER RECHERCHENBERICHT

Nummer der Anmeldung

EP 87 11 2195

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-1 634 925 (G. STAFFORD)<br>* Anspruch 9 *<br>--- | | C 08 K 5/40<br>C 08 L 21/00 |
| A | CHEMICAL ABSTRACTS, Band 91, Nr. 8, 20. August 1979, Seite 67, Zusammenfassung Nr. 58435r, Columbus, Ohio, US; N. YU. GRUSHEVSKAYA: "Determination of the vulcanization accelerator tetrabenzilthiuram disulfide and some of its reaction products in sanitary-chemical studies of rubbers", & KAUCH. REZINA 1979, (5), 47-9<br>* Zusammenfassung *<br>----- | | |
| | | | RECHERCHIERTE SACHGEBIETE (Int. Cl.4) |
| | | | C 08 K<br>C 08 L |

Der vorliegende Recherchenbericht wurde für alle Patentansprüche erstellt

| Recherchenort | Abschlußdatum der Recherche | Prüfer |
|---|---|---|
| DEN HAAG | 06-07-1988 | VAN HUMBEECK F.W.C. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument